(19) Europäisches Patentamt / European Patent Office / Office européen des brevets

(11) **EP 2 921 278 B1**

(12) **EUROPEAN PATENT SPECIFICATION**

(45) Date of publication and mention
of the grant of the patent:
**25.04.2018 Bulletin 2018/17**

(21) Application number: **15159957.8**

(22) Date of filing: **19.03.2015**

(51) Int Cl.:
*B29C 47/00* *(2006.01)*      *B32B 7/06* *(2006.01)*
*B32B 7/12* *(2006.01)*      *B29C 47/06* *(2006.01)*
*B32B 27/18* *(2006.01)*      *C09J 7/02* *(2006.01)*
*C09J 133/12* *(2006.01)*      *C08L 33/12* *(2006.01)*
*B32B 27/08* *(2006.01)*      *B32B 27/30* *(2006.01)*

(54) **LAMINATE STRUCTURE and METHOD OF MANUFACTURING the same**

LAMINATSTRUKTUR und VERFAHREN ZU IHRER HERSTELLUNG

Structure stratifiée et procédé de sa fabrication

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2014 JP 2014057162**

(43) Date of publication of application:
**23.09.2015 Bulletin 2015/39**

(73) Proprietor: **Lintec Corporation**
**Tokyo 173-0001 (JP)**

(72) Inventors:
• **Miyazaki, Kentaro**
**Tokyo, 173-0001 (JP)**
• **Nakamura, Junichi**
**Tokyo, 173-0001 (JP)**
• **Taya, Naoki**
**Tokyo, 173-0001 (JP)**

(74) Representative: **J A Kemp**
**14 South Square**
**Gray's Inn**
**London WC1R 5JJ (GB)**

(56) References cited:
**WO-A1-00/13888**      **WO-A1-01/83212**
**WO-A1-95/16754**      **WO-A1-2013/134000**
**JP-A- 2001 062 894**      **US-A- 4 839 123**

## Description

[Technical Field]

The present invention relates to a method of manufacturing a laminate structure comprising a pressure sensitive adhesive sheet that comprises a base material and a pressure sensitive adhesive layer laminated on one surface of the base material. The present invention relates also to a laminate structure comprising a pressure sensitive adhesive sheet.

[Background Art]

As one example of a method of manufacturing a pressure sensitive adhesive sheet, there may be mentioned a method of coating one surface of a base material with a coating composition for forming a pressure sensitive adhesive layer and drying the obtained coating thereby to form the pressure sensitive adhesive layer.

As one example of a method of manufacturing a pressure sensitive adhesive sheet without performing the above coating step, there may be mentioned coextrusion molding which is designed such that a pressure sensitive adhesive sheet is manufactured through making a molten state of each of a resin composition for forming the base material (referred also to as a "first resin composition" in the present description) and a resin composition for forming the pressure sensitive adhesive layer (referred also to as a "second resin composition" in the present description) and laminating these melts while extruding them. This method of manufacturing a pressure sensitive adhesive sheet through the coextrusion molding is excellent in the productivity because the pressure sensitive adhesive sheet can be formed in one step. In addition, since the base material and the pressure sensitive adhesive layer are in contact with each other in a high temperature state immediately after the coextrusion molding, delamination is unlikely to occur at the interface therebetween, so that the pressure sensitive adhesive sheet can be obtained having high quality (delamination resistance), which may be advantageous.

Thus, the coextrusion molding is an excellent method of manufacturing a pressure sensitive adhesive sheet. To stably performing the manufacturing of a pressure sensitive adhesive sheet through the coextrusion molding, however, the following problems may have to be overcome.

When a pressure sensitive adhesive layer is manufactured through extrusion molding, in general, pellets to be at least a part of the second resin composition are supplied to a hopper of a molding machine; the pellets in the hopper and other materials are carried into a screw unit so that the pellets and the other materials are molten to be mixed and kneaded therein; and the second resin composition in the molten state is discharged into a feed block. The second resin composition is ordinarily relatively soft. Accordingly, autohesion of the pellets may occur in the hopper, as described in Patent Literature 1. In this case, the pellets cannot be appropriately carried into the screw unit of the molding machine, and the supply amount of the second resin composition from a die may be unstable. Therefore, it is required to avoid the autohesion of the pellets in the hopper to stabilize the supply amount of the second resin composition, thereby stabilizing the shape of the pressure sensitive adhesive layer obtained through the extrusion molding.

To this end, Patent Literature 1 discloses a means that includes coating pellets, which are formed primarily of acrylic-based resin, with an autohesion preventing agent having an average particle diameter of 2.5 μm or less.

[Prior Art Literature]

[Patent Literature]

[Patent Literature 1] JP2009-167312A
US 4 839 123 A describes a process for producing a polymer sheet comprising adding a curable silicon release component to a polymer, allowing the silicon component to migrate to a surface of the sheet, and curing the component.
WO 1995/016754 A1 describes a composite tape structure comprising two outer pressure-sensitive adhesive layers and a backing joined via melt processing, and a method of producing the composite tape structure.
WO 2013/134000 A1 describes an adhesive tape comprising an elastomeric backing having opposing first and second surfaces and an acrylate pressure sensitive adhesive disposed on at least one of the first and second surfaces of the backing.
WO 2001/083212 A1 describes a method for producing a multilayer coextrudate, comprising a plastic release layer.
JP 2001 062894 A describes an acrylic film produced from an acrylic resin powder with a mean particle size of 500 μm or more by a drying process.
WO 2000/013888 A1 describes adhesive constructions comprising a coextrudate of a polymeric film, an adhesive layer which may be formed from a thermoplastic elastomer, and a tackifier.

[Summary of the Invention]

[Problems to be solved by the Invention]

Patent Literature 1 points out that, if the average particle diameter of powder to be the autohesion preventing agent exceeds 2.5 μm, the transparency of the pressure sensitive adhesive layer obtained through the extrusion molding will deteriorate. However, the powder having an average particle diameter of 2.5 μm or less tends to agglomerate, and it is thus not easy to maintain a state of being 2.5 μm or less. It is therefore required to sufficiently manage the atmosphere and the like (in particular, humidity) during the storage of the powder and pay attention that the effect of agglomeration does not occur when the acrylic-based resin is coated with the powder.

The present invention has been made in consideration of the actual circumstances as the above, and an object of the present invention is to provide a method of manufacturing a laminate structure comprising a pressure sensitive adhesive sheet that can reduce the upper limit of the average particle diameter of powder capable of functioning as the autohesion preventing agent. Another object of the present invention is to provide a laminate structure comprising such a pressure sensitive adhesive sheet.

[Means for solving the Problems]

As a result of study by the present inventors to achieve the above objects, there has been obtained a novel finding that, by forming the powder capable of functioning as the autohesion preventing agent from a first resin that is a noncrosslinked-type resin having compatibility with a main resin contained in a second resin composition that is a resin composition for forming the pressure sensitive adhesive layer, a laminate comprising the pressure sensitive adhesive layer having an appropriate surface profile can be manufactured through coextrusion molding without providing a strict limit of 2.5 μm or less on the average particle diameter of the powder.

The "having compatibility with a main resin" as referred to in the present description means being able to be in a state of substantially dissolving in the main resin within a temperature region that is set for performing extrusion molding of the second resin composition which contains the main resin and the first resin (specific example of the temperature region may be mentioned as a temperature region of 200°C to 220°C).

The "average particle diameter" of powder as referred to in the present description means a particle diameter at an accumulated value of 50% in a particle size distribution of the powder (median diameter D50) obtained using a laser diffraction scattering particle size distribution measuring apparatus.

According to a first aspect of the present invention which has been accomplished based on the above finding, there is provided a method of manufacturing a laminate structure comprising a pressure sensitive adhesive sheet, the pressure sensitive adhesive sheet comprising a base material and a pressure sensitive adhesive layer laminated on one surface of the base material, wherein the method comprises one selected from (I), (II) and (III) : (I) a first coextrusion molding step of performing coextrusion molding of a first resin composition for forming the base material and a second resin composition for forming the pressure sensitive adhesive layer thereby to obtain a first laminate as the pressure sensitive adhesive sheet, the first laminate being formed such that the base material and the pressure sensitive adhesive layer are laminated on each other; (II) a second coextrusion molding step of performing coextrusion molding of a third resin composition for forming a release sheet and a second resin composition for forming the pressure sensitive adhesive layer thereby to obtain a second laminate formed such that the release sheet and the pressure sensitive adhesive layer are laminated on each other in a releasable manner, and a base material laminating step of laminating the base material on a surface of the second laminate at a side of the pressure sensitive adhesive layer to obtain the laminate structure comprising the pressure sensitive adhesive sheet and the release sheet; and (III)a third coextrusion molding step of performing coextrusion molding of a first resin composition for forming the base material, a second resin composition for forming the pressure sensitive adhesive layer and a third resin composition for forming a release sheet thereby to obtain a third laminate as the laminate structure comprising the pressure sensitive adhesive sheet and the release sheet, the third laminate being formed such that the base material is laminated on one surface of the pressure sensitive adhesive layer and the release sheet is laminated on other surface of the pressure sensitive adhesive layer in a releasable manner, wherein the second resin composition contains a main resin and a first resin, characterized in that: the first resin is a noncrosslinked-type resin having compatibility with the main resin; the first resin is a resin of the same series as the main resin; and the first resin is supplied as a powder when the second resin composition is prepared (Invention 1).

In the above invention (Invention 1), after the first coextrusion molding step, a release surface of a release sheet may be attached to a surface of the pressure sensitive adhesive sheet at a side of the pressure sensitive adhesive layer, and the laminate structure may be obtained comprising the pressure sensitive adhesive sheet and the release sheet (Invention 2) .

In the above invention (Invention 1 or 2), in the first coextrusion molding step, a ratio of an average value of a viscosity of the first resin composition within a range of a shear velocity of $10°$ to $10^3$ (unit: 1/s) to an average value of a viscosity of the second resin composition within a range of a shear velocity of $10°$ to $10^3$ (unit: 1/s) may be 1 or more and 4.3 or less at a temperature when the first resin composition and the second resin composition are in contact with each other to be laminated on each other (Invention 3).

In the above invention (Invention 1), in the second coextrusion molding step, a ratio of an average value of a viscosity of the third resin composition within a range of a shear velocity of $10°$ to $10^3$ (unit: 1/s) to an average value of a viscosity of the second resin composition within a range of a shear velocity of $10°$ to $10^3$ (unit: 1/s) may be 1 or more and 4.3 or less at a temperature when the third resin composition and the second resin composition are in contact with each other to be laminated on each other (Invention 4).

In the third coextrusion molding step in the above invention (Invention 1), a ratio of an average value of a viscosity of the first resin composition within a range of a shear velocity of $10^0$ to $10^3$ (unit: 1/s) to an average value of a viscosity of the second resin composition within a range of a shear velocity of $10^0$ to $10^3$ (unit: 1/s) may be 1 or more and 4.3 or less at a temperature when the first resin composition and the second resin composition are in contact with each other to be laminated on each other, and a ratio of an average value of a viscosity of the third resin composition within a range of a shear velocity of $10^0$ to $10^3$ (unit: 1/s) to an average value of a viscosity of the second resin composition within a range of a shear velocity of $10^0$ to $10^3$ (unit: 1/s) may be 1 or more and 4.3 or less at a temperature when the third resin composition and the second resin composition are in contact with each other to be laminated on each other (Invention 5).

In the above invention (Invention 1 to 5), the first resin may be in a state of being dissolved in the main resin in the second resin composition which is in a molten state (Invention 6) .

In the above invention (Invention 1 to Invention 6), the first resin may have a weight average molecular weight (Mw) of 500,000 or more in polystyrene equivalent (Invention 7).

In the above invention (Invention 1 to Invention 7), the powder may have an average particle diameter of more than 2.5 $\mu$m (Invention 8).

In the above invention (Invention 1 to Invention 8), the first resin may have a content of more than 0.01 mass% and less than 10 mass% in the second resin composition (Invention 9).

In the above invention (Invention 1 to Invention 9), the main resin and the first resin may each comprise an acrylic-based resin (Invention 10).

In the above invention (Invention 10), the main resin may comprise a (meth)acrylic-based triblock polymer (Invention 11) .

According to a second aspect of the present invention, there is provided a laminate structure comprising a pressure sensitive adhesive sheet, the pressure sensitive adhesive sheet comprising a base material and a pressure sensitive adhesive layer laminated on one surface of the base material, wherein the pressure sensitive adhesive layer contains a main resin and a first resin, and the laminate structure has any one of features (I), (II) and (III) : (I) the pressure sensitive adhesive sheet is a coextrusion molded product using a first resin composition for forming the base material and a second resin composition for forming the pressure sensitive adhesive layer; (II)the laminate structure further comprises a release sheet laminated on a surface of the pressure sensitive adhesive sheet at a side of the pressure sensitive adhesive layer in a releasable manner, and a laminate of the pressure sensitive adhesive layer and the release sheet is a coextrusion molded product using a second resin composition for forming the pressure sensitive adhesive layer and a third resin composition for forming the release sheet; and (III) the laminate structure further comprises a release sheet laminated on a surface of the pressure sensitive adhesive sheet at a side of the pressure sensitive adhesive layer in a releasable manner, and the laminate structure is a coextrusion molded product using a first resin composition for forming the base material, a second resin composition for forming the pressure sensitive adhesive layer and a third resin composition for forming the release sheet characterized in that: the first resin is a noncrosslinked-type resin having compatibility with the main resin; and the first resin is a resin of the same series as the main resin (Invention 12).

According to a third aspect of the present invention, there is provided a method of manufacturing a laminate structure comprising a pressure sensitive adhesive sheet, the pressure sensitive adhesive sheet comprising a base material and a pressure sensitive adhesive layer laminated on one surface of the base material, characterized in that: the method comprises a first coextrusion molding step of performing coextrusion molding of a first resin composition for forming the base material and a second resin composition for forming the pressure sensitive adhesive layer thereby to obtain a first laminate as the pressure sensitive adhesive sheet, the first laminate being formed such that the base material and the pressure sensitive adhesive layer are laminated on each other, wherein the second resin composition contains a main resin and a first resin that is a noncrosslinked-type resin having compatibility with the main resin, the first resin is a resin of the same series as the main resin, and the first resin is supplied as a powder when the second resin composition is prepared.

According to a fourth aspect of the present invention, there is provided a method of manufacturing a laminate structure comprising a pressure sensitive adhesive sheet, the pressure sensitive adhesive sheet comprising a base material and a pressure sensitive adhesive layer laminated on one surface of the base material, characterized in that the method comprises: a second coextrusion molding step of performing coextrusion molding of a third resin composition for forming a release sheet and a second resin composition for forming the pressure sensitive adhesive layer thereby to obtain a second laminate formed such that the release sheet and the pressure sensitive adhesive layer are laminated on each other in a releasable manner; and a base material laminating step of laminating the base material on a surface of the second laminate at a side of the pressure sensitive adhesive layer to obtain the laminate structure comprising the pressure sensitive adhesive sheet and the release sheet, wherein the second resin composition contains a main resin and a first resin that is a noncrosslinked-type resin having compatibility with the main resin, the first resin is a resin of the same series as the main resin, and the first resin is supplied as a powder when the second resin composition is prepared.

According to a fifth aspect of the present invention, there is provided a method of manufacturing a laminate structure comprising a pressure sensitive adhesive sheet, the pressure sensitive adhesive sheet comprising a base material and a pressure sensitive adhesive layer laminated on one surface of the base material, characterized in that: the method comprises a third coextrusion molding step of performing coextrusion molding of a first resin composition for forming the base material, a second resin composition for forming the pressure sensitive adhesive layer and a third resin composition for forming a release sheet thereby to obtain a third laminate as the laminate structure comprising the pressure sensitive adhesive sheet and the release sheet, the third laminate being formed such that the base material is laminated on one surface of the pressure sensitive adhesive layer and the release sheet is laminated on other surface of the pressure sensitive adhesive layer in a releasable manner, wherein the second resin composition contains a main resin and a first resin that is a noncrosslinked-type resin having compatibility with the main resin, the first resin is a resin of the same series as the main resin, and the first resin is supplied as a powder when the second resin composition is prepared.

According to a sixth aspect of the present invention, there is provided a laminate structure comprising a pressure sensitive adhesive sheet, the pressure sensitive adhesive sheet comprising a base material and a pressure sensitive adhesive layer laminated on one surface of the base material, characterized in that: the pressure sensitive adhesive sheet is a coextrusion molded product using a first resin composition for forming the base material and a second resin composition for forming the pressure sensitive adhesive layer, the pressure sensitive adhesive layer contains a main resin and a first resin that is a noncrosslinked-type resin having compatibility with the main resin, and the first resin is a resin of the same series as the main resin.

According to a seventh aspect of the present invention, there is provided a laminate structure comprising a pressure sensitive adhesive sheet and a release sheet, the pressure sensitive adhesive sheet comprising a base material and a pressure sensitive adhesive layer laminated on one surface of the base material, the release sheet being laminated on a surface of the pressure sensitive adhesive sheet at a side of the pressure sensitive adhesive layer in a releasable manner, characterized in that: a laminate of the pressure sensitive adhesive layer and the release sheet is a coextrusion molded product using a second resin composition for forming the pressure sensitive adhesive layer and a third resin composition for forming the release sheet, and the pressure sensitive adhesive layer contains a main resin and a first resin that is a noncrosslinked-type resin having compatibility with the main resin, and the first resin is a resin of the same series as the main resin.

According to a eighth aspect of the present invention, there is provided a laminate structure comprising a pressure sensitive adhesive sheet and a release sheet, the pressure sensitive adhesive sheet comprising a base material and a pressure sensitive adhesive layer laminated on one surface of the base material, the release sheet being laminated on a surface of the pressure sensitive adhesive sheet at a side of the pressure sensitive adhesive layer in a releasable manner, characterized in that: the laminate structure is a coextrusion molded product using a first resin composition for forming the base material, a second resin composition for forming the pressure sensitive adhesive layer and a third resin composition for forming the release sheet, and the pressure sensitive adhesive layer contains a main resin and a first resin that is a noncrosslinked-type resin having compatibility with the main resin, and the first resin is a resin of the same series as the main resin.

[Advantageous Effect of the Invention]

According to the present invention, when the laminate comprising the pressure sensitive adhesive layer is manufactured through the coextrusion molding, it is possible to reduce the effect of the average particle diameter of powder on the properties of the pressure sensitive adhesive layer. Therefore, the method of manufacturing a laminate structure comprising the pressure sensitive adhesive sheet according to the present invention is excellent in the productivity. Moreover, according to the present invention, there is provided a laminate structure comprising the pressure sensitive adhesive sheet of which the properties of the pressure sensitive adhesive layer are good.

[Brief Description of Drawings]

[FIG. 1] FIG. 1 is a schematic cross-sectional view of a pressure sensitive adhesive sheet according to an embodiment of the present invention.
[FIG. 2] FIG. 2 is a schematic cross-sectional view of a laminate structure comprising a pressure sensitive adhesive sheet and a release sheet according to an embodiment of the present invention.

[Mode(s) for Carrying out the Invention]

Embodiments of the present invention will be described hereinafter.

1. First method of manufacturing laminate structure

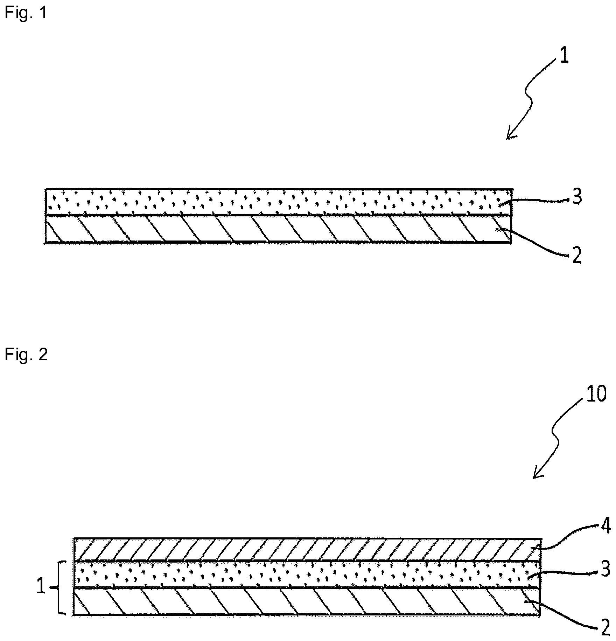

The laminate structure according to an embodiment of the present invention comprises a pressure sensitive adhesive sheet 1, which comprises a base material 2 and a pressure sensitive adhesive layer 3 laminated on one surface of the base material 2, as illustrated in FIG. 1.

A first method of manufacturing the laminate structure according to an embodiment of the present invention includes manufacturing the pressure sensitive adhesive sheet 1 through a first coextrusion molding step which will be described below. In the first coextrusion molding step, a state is established in which each of a first resin composition that is a resin composition for forming the base material 2 and a second resin composition that is for forming the pressure sensitive adhesive layer 3 are molten, and coextrusion molding for these melts is performed thereby to obtain a first laminate as the pressure sensitive adhesive sheet 1 such that the base material 2 and the pressure sensitive adhesive layer 3 are laminated on each other.

An extrusion molding machine, which is an apparatus for performing the first coextrusion molding step, comprises a plurality of extruders each comprising a hopper and a screw unit provided in a coupled manner with the hopper, and further comprises a feed block and a T-die. Basic action of the extrusion molding machine is as follows. First, when raw materials for the first resin composition are put into the hopper of an extruder, the raw materials are carried into the screw unit, and are molten to be mixed and kneaded in the screw unit to become the first resin composition. Raw materials for the second resin composition are also put into the hopper of another extruder, and are molten to be mixed and kneaded in the screw unit of the extruder to become the second resin composition. The first resin composition and the second resin composition are pushed out from respective extruders into the feed block. These pushed-out resin compositions are introduced therein to be laminated on each other while being each formed into a flat sheet-like shape in the feed block so that one surfaces thereof are in contact with each other. The laminate thus obtained is cooled while the thickness is adjusted by the T-die, rollers and the like, and the pressure sensitive adhesive sheet 1 is obtained in this way.

The hopper of an extruder has a function to perform adjustment such that an appropriate amount of the raw materials for the resin composition is carried into the screw unit. Therefore, the raw materials are in a state of being stored in the hopper before being carried into the screw unit. The stored raw materials are not particularly required to be heated, but may usually have a higher temperature than ordinary temperature due to the heat conduction from the screw unit. As will be described later, the second resin composition, which is a resin composition for forming the pressure sensitive adhesive layer, contains a main resin such as acrylic-based resin. This main resin is ordinarily supplied as pellets to the hopper. The main resin is a component that contributes directly to the pressure sensitive adhesion of the pressure sensitive adhesive layer 3, and may therefore be a material of which the glass-transition temperature is lower than ordinary temperature. Accordingly, the pressure sensitive adhesion of the pellets may be enhanced in the hopper to cause so-called autohesion of pellets so that the pellets adhere to one another. If the autohesion of pellets occurs, the amount of raw materials including the pellets carried from the hopper into the screw unit is unlikely to be stabilized, and the amount of the second resin composition pushed out from the extruder readily vary. This variation in the amount pushed out from the extruder will result in deterioration of the uniformity in the thickness of the pressure sensitive adhesive layer 3 in the pressure sensitive adhesive sheet 1.

In this regard, Patent Literature 1 discloses coating the pellets with powder which functions as an autohesion preventing agent. Patent Literature 1 also points out that the powder should have an average particle diameter of 2.5 $\mu$m or less so as not to affect the transparency of the pressure sensitive adhesive layer. As previously described, however, handling such powder of small diameter may lead to problems in the manufacturing management.

In the first method of manufacturing the laminate structure according to an embodiment of the present invention, the second resin composition contains as its component a first resin which can function as an autohesion preventing agent in a state of being stored in the hopper as with the powder disclosed in Patent Literature 1. The first resin is a noncrosslinked-type resin that has compatibility with the main resin, and is a resin of the same series as the main resin.

The first resin is a noncrosslinked-type resin of the same series as the main resin and therefore the first resin is in a state of being dissolved in the main resin in the second resin composition which is in a molten state, even when the first resin is supplied as powder. Accordingly, the surface property of the pressure sensitive adhesive layer formed of the second resin composition is unlikely to deteriorate even if the first resin is supplied as powder having an average particle diameter of more than 2.5 $\mu$m. Therefore, the first method of manufacturing the laminate structure according to an embodiment of the present invention allows for both avoiding the occurrence of autohesion of the raw materials for the second resin composition and obtaining the pressure sensitive adhesive sheet 1 comprising the pressure sensitive adhesive layer 3 of which the variation in the thickness is small. Moreover, since the shape of the powder of the first resin is unlikely to affect the transparency of the pressure sensitive adhesive layer 3, the shape of the powder may not have to be strictly controlled. Therefore, the pressure sensitive adhesive sheet 1 comprising the pressure sensitive adhesive layer 3 excellent in the properties (such as transparency) can be easily manufactured.

In the first coextrusion molding step, it is preferred that the ratio of an average value of a viscosity of the first resin composition within a range of a shear velocity of $10^0$ to $10^3$ (unit: 1/s) to an average value of a viscosity of the second resin composition within a range of a shear velocity of $10^0$ to $10^3$ (unit: 1/s) (this average value of the viscosity is also referred to as a "second viscosity" in the present descriptions) (this ratio is also referred to as a "first viscosity ratio" in the present description) is 1 or more and 4.3 or less at a temperature when the first resin composition and the second resin composition are in contact with each other to be laminated on each other, specifically at a temperature between those of the feed block and the T-die.

In the present description, the viscosity of a resin composition is defined as a value that is derived using the Cross model. In this case, a capillary rheometer may be used to measure the shear velocity, apparent viscosity and temperature, which are inserted into Expression 1 and Expression 2 below, and fitting may be performed to derive an index number.

[Expression 1]

$$\eta = \frac{\eta_0}{1 + \left(\dfrac{\eta_0 \dot{\gamma}}{\tau^*}\right)^{1-c}}$$

[Expression 2]

$$\eta_0 = a \exp\left(\frac{T_b}{T + 273.15}\right)$$

In the above expressions, $\eta$ represents the viscosity (unit: Pa·s) obtained from a regression expression at given temperature and given shear velocity, $\gamma$ represents the shear velocity (unit: 1/s), $\tau^*$ represents the critical shear stress (unit: Pa·s), c represents the index number, $\eta_0$ represents the critical viscosity (unit: 1/s), "a" represent the viscosity (unit Pa·s), $T_b$ represents the temperature coefficient (unit: K), and T represents the temperature (unit: K).

When the first viscosity ratio is within the above range, the base material 2 and the pressure sensitive adhesive layer 3 are appropriately laminated on each other, and the pressure sensitive adhesive sheet 1 can be easily formed. In general, the second resin composition is easier to soften at a low temperature than the first resin composition, and the first viscosity ratio may therefore be 1 or more. If the first viscosity ratio is unduly higher than 4.3, the second resin composition is likely to be located so as to surround a lamellar body formed of the first resin composition. This phenomenon may be referred to as "encapsulation" in the present description. In addition, if the first viscosity ratio is particularly high, a member may be formed having a structure in which the second resin composition is dispersed in a lamellar body of the first resin composition. In view of stably manufacturing the pressure sensitive adhesive sheet 1 comprising a laminate of the base material 2 and the pressure sensitive adhesive layer 3, the first viscosity ratio may preferably be 1.0 or more and 4.0 or less, and more preferably 1.0 or more and 3.5 or less.

The above first viscosity ratio can be adjusted by varying the weight average molecular weight (Mw) in polystyrene equivalent of the first resin contained in the second resin composition, and/or by varying the content of the first resin in the second resin composition.

In the present description, a value of the weight average molecular weight (Mw) in polystyrene equivalent is a value when it is measured using a gel permeation chromatography (GPC) method (polystyrene standard). The measurement using such a method is performed with the apparatus and conditions as below, for example.

Name of apparatus: HLC-8220GPC available from TOSOH CORPORATION
Column: TSKgelGMHXL, TSKgelGMHXL and TSKgel2000HXL coupled in series
Solvent: tetrahydrofuran (THF)
Injection amount: 80 $\mu$l
Measurement temperature: 40°C
Flow rate: 1 ml/min
Detector: Differential refractometer
Sample concentration: 1% (w/v)

The first resin dissolved in the main resin in the molten second resin composition interacts appropriately with the main resin. Therefore, if the weight average molecular weight (Mw) in polystyrene equivalent of the first resin contained in the second resin composition is increased, and/or the content of the first resin in the second resin composition is increased, the flowability of the main resin in the molten second resin composition can be reduced, i.e., the second viscosity can be increased. As such, the first viscosity ratio can be reduced by increasing the weight average molecular weight (Mw) in polystyrene equivalent of the first resin, and/or by increasing the content of the first resin in the second resin composition, unless other factors are varied.

The first viscosity ratio can also be reduced by increasing the molecular weight of the main resin, but in this case the pressure sensitive adhesion of the pressure sensitive adhesive layer 3 may considerably deteriorate. In contrast, when the weight average molecular weight (Mw) in polystyrene equivalent of the first resin and/or the content of the first resin in the second resin composition are varied as the above, it is possible to reduce the first viscosity ratio while suppressing the effect on the pressure sensitive adhesion of the pressure sensitive adhesive layer 3.

In view of realizing stably to reduce the first viscosity ratio, the weight average molecular weight (Mw) in polystyrene equivalent of the first resin may preferably be 500,000 or more, more preferably 750,000 or more, and particularly preferably 1,000,000 or more. The upper limit of the weight average molecular weight (Mw) in polystyrene equivalent of the first resin is not limited as long as the first resin can dissolve in the main resin in the molten second resin composition.

The lower limit of the content of the first resin in the second resin composition is not limited as long as the powder of the first resin can function as an autohesion preventing agent. The upper limit of the content of the first resin in the second resin composition is not limited as long as the first resin can dissolve in the main resin in the molten second resin composition. The content of the first resin in the second resin composition may preferably be more than 0.01 mass% and less than 10 mass%.

After the pressure sensitive adhesive sheet 1 is obtained through the above first coextrusion molding step, an attaching step may be carried out such that the release surface of a release sheet 4 is attached to the surface of the pressure sensitive adhesive sheet 1 at the side of the pressure sensitive adhesive layer 3. By carrying out such an attaching step, there can be obtained a laminate structure 10 comprising the pressure sensitive adhesive sheet 1 and the release sheet 4 as illustrated in FIG. 2.

2. Second method of manufacturing laminate structure

A second method of manufacturing a laminate structure according to an embodiment of the present invention comprises a second coextrusion molding step and a base material laminating step, which will be described below. According to the second method of manufacturing a laminate structure, there can be obtained the laminate structure 10 comprising the pressure sensitive adhesive sheet 1 and the release sheet 4 which is laminated in a releasable manner on the surface of the pressure sensitive adhesive sheet 1 at the side of the pressure sensitive adhesive layer 3, as illustrated in FIG. 2.

In the second coextrusion molding step, coextrusion molding is performed for a third resin composition for forming the release sheet 4 and the previously-described second resin composition thereby to obtain a second laminate formed such that the release sheet 4 and the pressure sensitive adhesive layer 3 are laminated on each other in a releasable manner. Conditions for the coextrusion molding and other procedure in the second coextrusion molding step may have to be appropriately set. The mechanism and the basic action of the extrusion molding machine for performing the second coextrusion molding step are common with those for performing the first coextrusion molding step, and the description thereof will therefore be omitted.

As previously described, since the second resin composition contains the first resin, the phenomenon of autohesion is unlikely to occur in the pellets of the second resin composition in the hopper. Moreover, the first resin is a noncrosslinked-type resin having compatibility with the main resin. Therefore, the pressure sensitive adhesive layer 3 of the pressure sensitive adhesive sheet 1, which is included in the laminate structure 10 manufactured according to the second method of manufacturing a laminate structure, has excellent properties (such as thickness uniformity, surface property and transparency).

In the base material laminating step, the base material 2 is laminated on the surface of the second laminate, which is obtained by carrying out the above second coextrusion molding step, at the side of the pressure sensitive adhesive layer 3. The base material 2 may be laminated directly on the surface of the pressure sensitive adhesive layer 3. In an alternative embodiment, a lamellar body may be interposed between the base material 2 and the pressure sensitive adhesive layer 3 in order to reduce the possibility of delamination therebetween (such a lamellar body may not be a continuous body). Examples of the lamellar body include an adhesive layer formed of epoxy adhesive or the like. Primer treatment such as corona treatment and silane coupling treatment may be performed for the surface of the base material 2 facing the pressure sensitive adhesive layer 3.

In such a manner, there can be obtained the laminate structure 10 comprising the pressure sensitive adhesive sheet 1 and the release sheet 4.

In the second coextrusion molding step, it is preferred that the ratio of an average value of a viscosity of the third resin composition within a range of a shear velocity of $10^0$ to $10^3$ (unit: 1/s) to an average value of a viscosity of the second resin composition within a range of a shear velocity of $10^0$ to $10^3$ (unit: 1/s) (this ratio is also referred to as a "second viscosity ratio" in the present description) is 1 or more and 4.3 or less at a temperature when the third resin composition and the second resin composition are in contact with each other to be laminated on each other, specifically at a temperature between those of the feed block and the T-die.

When the second viscosity ratio is within the above range, the pressure sensitive adhesive layer 3 and the release sheet 4 are appropriately laminated on each other, and the second laminate can be easily formed. In general, the second resin composition is easier to soften at a low temperature than the third resin composition, and the second viscosity ratio may therefore be 1 or more. If the second viscosity ratio is unduly higher than 4.3, the phenomenon of encapsulation may readily occur. In addition, if the second viscosity ratio is particularly high, a member may be formed having a structure in which the second resin composition is dispersed in a lamellar body of the third resin composition. In view of stably manufacturing the second laminate, the second viscosity ratio may preferably be 1.0 or more and 4.3 or less, more preferably 1.0 or more and 3.7 or less, and particularly preferably 1.0 or more and 2.0 or less.

The above second viscosity ratio can be adjusted by varying the weight average molecular weight (Mw) in polystyrene equivalent of the first resin contained in the second resin composition, and/or by varying the content of the first resin in the second resin composition.

Details of varying the weight average molecular weight (Mw) in polystyrene equivalent of the first resin and varying the content of the first resin in the second resin composition are the same as those in the case of the first method of manufacturing a laminate structure, and the description thereof will be omitted.

3. Third method of manufacturing laminate structure

A third method of manufacturing a laminate structure according to an embodiment of the present invention comprises a third coextrusion molding step, which will be described below. According to the third method of manufacturing a laminate structure, there can be obtained in one step the laminate structure 10 comprising the pressure sensitive adhesive sheet 1 and the release sheet 4 which is laminated in a releasable manner on the surface of the pressure sensitive adhesive sheet 1 at the side of the pressure sensitive adhesive layer 3, as illustrated in FIG. 2.

In the third coextrusion molding step, coextrusion molding is performed for the first resin composition, the second resin composition and the third resin composition thereby to obtain a third laminate as the laminate structure 10. The third laminate is formed such that the base material 2 is laminated on one surface of the pressure sensitive adhesive layer 3 and the release sheet 4 is laminated on the other surface of the pressure sensitive adhesive layer 3 in a releasable manner. Conditions for the coextrusion molding and other procedure in the third coextrusion molding step may have to be appropriately set. The mechanism and the basic action of the extrusion molding machine for performing the third coextrusion molding step are common with those for performing the first coextrusion molding step, and the description thereof will therefore be omitted. Three lamellar bodies that constitute the third laminate may be laminated concurrently, or may otherwise be laminated in a stepwise manner.

As previously described, since the second resin composition contains the first resin, the phenomenon of autohesion is unlikely to occur in the pellets of the second resin composition in the hopper. Moreover, the first resin is a noncrosslinked-type resin having compatibility with the main resin. Therefore, the pressure sensitive adhesive layer 3 of the pressure sensitive adhesive sheet 1, which is included in the laminate structure 10 manufactured according to the third method of manufacturing a laminate structure, has excellent properties (such as thickness uniformity, surface property and transparency).

In the third coextrusion molding step, it is preferred that the ratio of an average value of a viscosity of the first resin composition within a range of a shear velocity of $10^0$ to $10^3$ (unit: 1/s) to an average value of a viscosity of the second resin composition within a range of a shear velocity of $10^0$ to $10^3$ (unit: 1/s) (this ratio is also referred to as a "third viscosity ratio" in the present description) is 1 or more and 4.3 or less at a temperature when the first resin composition and the second resin composition are in contact with each other to be laminated on each other, specifically at a temperature between those of the feed block and the T-die.

In the third coextrusion molding step, it is also preferred that the ratio of an average value of a viscosity of the third resin composition within a range of a shear velocity of $10^0$ to $10^3$ (unit: 1/s) to an average value of a viscosity of the second resin composition within a range of a shear velocity of $10^0$ to $10^3$ (unit: 1/s) (this ratio is also referred to as a "fourth viscosity ratio" in the present description) is 1 or more and 4.3 or less at a temperature when the third resin composition and the second resin composition are in contact with each other to be laminated on each other, specifically at a temperature between those of the feed block and the T-die.

When the third viscosity ratio and/or the fourth viscosity ratio are within the above range, the base material 2 and the pressure sensitive adhesive layer 3 are appropriately laminated on each other, and/or the pressure sensitive adhesive layer 3 and the release sheet 4 are appropriately laminated on each other, so that the third laminate can be easily formed. Details of the third viscosity ratio are the same as those of the first viscosity ratio, and details of the fourth viscosity ratio are the same as those of the second viscosity ratio, so the detailed descriptions of the both will be omitted.

The above third viscosity ratio and fourth viscosity ratio can be adjusted by varying the weight average molecular weight (Mw) in polystyrene equivalent of the first resin contained in the second resin composition, and/or by varying the content of the first resin in the second resin composition. Details of varying the weight average molecular weight (Mw) in polystyrene equivalent of the first resin and varying the content of the first resin in the second resin composition are the same as those in the case of the first method of manufacturing a laminate structure, and the description thereof will be omitted.

4. First laminate structure

Specific example of a first laminate structure according to an embodiment of the present invention comprises the pressure sensitive adhesive sheet 1, as illustrated in FIG. 1. The pressure sensitive adhesive sheet 1, which comprises the base material 2 and the pressure sensitive adhesive layer 3 laminated on one surface of the base material 2, is a coextrusion molded product using a first resin composition for forming the base material 2 and a second resin composition for forming the pressure sensitive adhesive layer 3. The pressure sensitive adhesive sheet 1, which constitutes the first laminate structure according to an embodiment of the present invention, may be the first laminate manufactured in the previously-described first method of manufacturing a laminate structure.

(1) Base material

The base material 2 is formed of the first resin composition. The composition of the first resin composition is not limited as long as the pressure sensitive adhesive sheet 1 can be manufactured through coextrusion molding of the first resin composition and the second resin composition. The composition may be appropriately set depending on the use of the pressure sensitive adhesive sheet 1. The first resin composition can be molded through extrusion, and thus has thermoplasticity.

Examples of resin components contained in the first resin composition include: olefin-based polymer such as polyethylene, polypropylene and ethylene-(meth)acrylic acid copolymer; ester-based polymer such as polyethylene terephthalate and polybutylene terephthalate; and amide-based polymer such as nylon 6,6 and nylon 6. The " (meth) acrylic acid" as used in the present description means both acrylic acid and methacrylic acid. The same applies to other similar terms.

The first resin composition may also contain other components, such as colorant, filler, antioxidant and ultraviolet absorber, depending on the use.

The thickness of the base material 2 may have to be appropriately set depending on the use, and is not limited. The thickness of the base material 2 may ordinarily be 10 $\mu$m to 1,000 $\mu$m, preferably 20 $\mu$m to 500 $\mu$m, and particularly preferably 25 $\mu$m to 200 $\mu$m.

(2) Pressure sensitive adhesive layer

As previously described, the second resin composition for forming the pressure sensitive adhesive layer 3 contains the main resin and the first resin which is a noncrosslinked-type resin having compatibility with the main resin.

The type of the main resin is not limited. The main resin is a component that contributes directly to the generation of pressure sensitive adhesion of the pressure sensitive adhesive layer 3. Specific examples of the main resin include rubber-based resin, acrylic-based resin, silicone-based resin, and polyvinyl ether-based resin. Among them, acrylic-based resin is preferred in view of easy handling ability, stable availability and the like. Specific examples of the acrylic-based resin include (meth)acrylic-based triblock polymer, such as polymethyl methacrylate-polybutyl acrylate-polymethyl methacrylate and polymethyl methacrylate-poly2-ethylhexyl acrylate-polymethyl methacrylate. The main resin may be constituted of one kind of material, or may also be constituted of two or more kinds of materials.

The weight average molecular weight (Mw) in polystyrene equivalent of the main resin is not limited. In view of the first resin readily having compatibility with the main resin, the weight average molecular weight (Mw) in polystyrene equivalent of the main resin may preferably be 10,000 to 1,000,000, and more preferably 20,000 to 700,000.

Specific type of the first resin is not limited as long as the first resin is a noncrosslinked-type resin of the same series as the main resin and having compatibility with the main resin and the first resin can be powder within a temperature region in the hopper of the extruder.

In view of stably realizing that the first resin has compatibility with the main resin, the first resin is a resin of the same series as the main resin. More specifically, when the main resin comprises (meth)acrylic-based resin, it is preferred that the first resin is also (meth)acrylic-based resin.

When the first resin is powder in the hopper of the extruder, the shape thereof is not limited. Even when the average particle diameter of the powder of the first resin is 2.5 $\mu$m or more, the powder dissolves in the main resin in the screw unit, so that the properties of the pressure sensitive adhesive layer 3 (such as surface property and transparency) may not readily affected by the average particle diameter of the powder.

The content of the first resin in the second resin composition is not limited as long as the first resin functions as an autohesion preventing agent and if necessary functions to adjust the second viscosity. The content of the first resin in the second resin composition may preferably be more than 0.01 mass% and less than 10 mass%, more preferably 0.1 mass% or more and 5 mass% or less, and particularly preferably 0.5 mass% or more and 3 mass% or less.

The second resin composition may contain other components than the main resin and the first resin depending on the functions required. For example, when high pressure sensitive adhesion is required, a tackifier resin may be contained. When the pressure sensitive adhesion is required to be varied, an energy ray polymerizable compound may be contained. The content of such additive components in the second resin composition may be set depending on the functions required.

The thickness of the pressure sensitive adhesive layer 3 is to be appropriately set depending on the use thereof, and is not limited. The thickness of the pressure sensitive adhesive layer 3 may ordinarily be 3 $\mu$m to 500 $\mu$m, and preferably about 5 $\mu$m to 200 $\mu$m.

(3) Ratio with regard to viscosity

It is preferred that the ratio of an average value of a viscosity at 220°C of the first resin composition within a range of a shear velocity of $10^0$ to $10^3$ (unit: 1/s) to an average value of a viscosity at 220°C of the second resin composition within a range of a shear velocity of $10^0$ to $10^3$ (unit: 1/s) is 1 or more and 4.3 or less. In the present description, 220°C may be considered as one typical example of a temperature when two or more resin compositions are in contact with one another to perform coextrusion molding.

(4) Release sheet

The first laminate structure according to an embodiment of the present invention may have the same basic structure as that of the laminate structure 10 illustrated in FIG. 2 such that the release sheet 4 is attached to the surface of the pressure sensitive adhesive sheet 1 at the side of the pressure sensitive adhesive layer 3.

A sheet of film or paper may be used, for example, as the release sheet 4 which may be included in the first laminate structure. Examples of the film include polyethylene film, polypropylene film, polybutene film, polybutadiene film, polymethylpentene film, polyvinyl chloride film, vinyl chloride copolymer film, polyethylene terephthalate film, polyethylene naphthalate film, polybutylene terephthalate film, polyurethane film, ethylene-vinyl acetate film, ionomer resin film, ethylene-(meth)acrylic acid copolymer film, ethylene- (meth) acrylic ester copolymer film, polystyrene film, polycarbonate film, polyimide film, and fluoropolymer film. Examples of the paper include glassine paper and wood-free paper. A cross-linked film thereof may also be used. A plurality of such films may be laminated as a multilayer film.

It is preferred that the release surface (surface to be in contact with the pressure sensitive adhesive layer 3) of the above release sheet 4 is subjected to release treatment. Examples of the release agent used in the release treatment include alkyd-based, silicone-based, fluorine-based, unsaturated polyester-based, polyolefin-based and wax-based release agents.

The thickness of the release sheet 4 is not particularly limited, and may ordinarily be about 20 $\mu$m to 150 $\mu$m.

5. Second laminate structure

As illustrated in FIG. 2, the second laminate structure 10 according to an embodiment of the present invention comprises the pressure sensitive adhesive sheet 1 and the release sheet 4 which is laminated in a releasable manner on the surface of the pressure sensitive adhesive sheet 1 at the side of the pressure sensitive adhesive layer 3. The pressure sensitive adhesive layer 3 and the release sheet 4, which are included in the second laminate structure 10 according to an embodiment of the present invention, form a laminate that is a coextrusion molded product using a second resin composition for forming the pressure sensitive adhesive layer 3 and a third resin composition for forming the release sheet 4. This laminate comprising the pressure sensitive adhesive layer 3 and the release sheet 4 may be the second laminate manufactured in the previously-described second method of manufacturing a laminate structure.

A sheet of film or paper may be used, for example, as the base material 2 which may be included in the second laminate structure. Examples of the film include polyethylene film, polypropylene film, polybutene film, polybutadiene film, polymethylpentene film, polyvinyl chloride film, vinyl chloride copolymer film, polyethylene terephthalate film, polyethylene naphthalate film, polybutylene terephthalate film, polyurethane film, ethylene-vinyl acetate film, ionomer resin film, ethylene-(meth)acrylic acid copolymer film, ethylene- (meth) acrylic ester copolymer film, polystyrene film, polycarbonate film, polyimide film, and fluoropolymer film. Examples of the paper include glassine paper and wood-free paper. A cross-linked film thereof may also be used. A plurality of such films may be laminated as a multilayer film.

Details of the pressure sensitive adhesive sheet 1 and the pressure sensitive adhesive layer 3 are the same as those in the case of the first laminate structure, and the detailed descriptions thereof will be omitted. The base material 2 and the pressure sensitive adhesive layer 3 may be in direct contact with each other. In an alternative embodiment, a lamellar body may be interposed between the base material 2 and the pressure sensitive adhesive layer 3 in order to reduce the possibility of delamination therebetween (such a lamellar body may not be a continuous body). Examples of the lamellar body include an adhesive layer formed of epoxy adhesive or the like. Primer treatment such as corona treatment and silane coupling treatment may be performed for the surface of the base material 2 facing the pressure sensitive adhesive layer 3.

The release sheet 4 is formed of the third resin composition. The composition of the third resin composition is not limited as long as the pressure sensitive adhesive sheet 1 can be manufactured through coextrusion molding using the third resin composition with the second resin composition. The composition may be appropriately set depending on the use of the pressure sensitive adhesive sheet 1. The third resin composition can be molded through extrusion, and thus has thermoplasticity. It is preferred that the second resin composition contains acrylic-based resin and the third resin composition contains olefin-based polymer.

It is preferred that the ratio of an average value of a viscosity at 220°C of the third resin composition within a range of a shear velocity of $10^0$ to $10^3$ (unit: 1/s) to an average value of a viscosity at 220°C of the second resin composition within a range of a shear velocity of $10^0$ to $10^3$ (unit: 1/s) is 1 or more and 4.3 or less.

6. Third laminate structure

The third laminate structure according to an embodiment of the present invention comprises: the pressure sensitive adhesive sheet 1 which comprises the base material 2 and the pressure sensitive adhesive layer 3 laminated on one surface of the base material 2; and the release sheet 4 which is laminated in a releasable manner on the surface of the pressure sensitive adhesive sheet 1 at the side of the pressure sensitive adhesive layer 3. The third laminate structure according to an embodiment of the present invention is a coextrusion molded product using a first resin composition for forming the base material 1, a second resin composition for forming the pressure sensitive adhesive layer 3 and a third resin composition for forming the release sheet 4. The third laminate structure may be the third laminate manufactured in the previously-described third method of manufacturing a laminate structure.

Details of the pressure sensitive adhesive sheet 1, the base material 2 and the pressure sensitive adhesive layer 3 are the same as those in the case of the previously-described second laminate structure, and the detailed descriptions thereof will be omitted.

The release sheet 4 is formed of the third resin composition. The composition of the third resin composition is not limited as long as the third laminate structure can be manufactured through coextrusion molding using the third resin composition with the first resin composition and the second resin composition. The composition may be appropriately set depending on the use of the pressure sensitive adhesive sheet 1. The third resin composition can be molded through extrusion, and thus has thermoplasticity.

It may be preferred that the second resin composition for forming the pressure sensitive adhesive layer 3 contains acrylic-based resin; the first resin composition for forming the base material 2 contains ester-based polymer; and the third resin composition for forming the release sheet 4 contains olefin-based polymer.

It is preferred that the ratio of an average value of a viscosity at 220°C of the first resin composition within a range of a shear velocity of $10^0$ to $10^3$ (unit: 1/s) to an average value of a viscosity at 220°C of the second resin composition within a range of a shear velocity of $10^0$ to $10^3$ (unit: 1/s) is 1 or more and 4.3 or less.

It is preferred that the ratio of an average value of a viscosity at 220°C of the third resin composition within a range of a shear velocity of $10^0$ to $10^3$ (unit: 1/s) to an average value of a viscosity at 220°C of the second resin composition within a range of a shear velocity of $10^0$ to $10^3$ (unit: 1/s) is 1 or more and 4.3 or less.

The embodiments heretofore explained are described to facilitate understanding of the present invention and are not described to limit the present invention. Therefore, it is intended that the elements disclosed in the above embodiments include all design changes and equivalents to fall within the technical scope of the present invention.

[Examples]

The present invention will hereinafter be described further specifically with reference to examples, etc, but the scope of the present invention is not limited to these examples, etc.

<Example 1>

One mass part of noncrosslinked polymethyl methacrylate microparticles ("Techpolymer MB-4" available from SEKISUI PLASTICS CO., Ltd., average particle diameter: 5.4 $\mu$m, weight average molecular weight (Mw) in polystyrene equivalent: 780,000) was added to 100 mass parts of (meth)acrylic-based triblock pressure sensitive adhesive ("KURARITY LA2330" available from KURARAY CO., LTD.), and they were mixed in a tumbler for 10 minutes to obtain a pressure sensitive adhesive composition (A) as the second resin composition. When this pressure sensitive adhesive composition (A) was pelletized, the obtained pellets were not recognized to adhere to one another (autohesion phenomenon was not recognized) under an environment of ordinary temperature (23°C).

Amorphous polyester ("Eastar GN001" available from Eastman Chemical Company, briefly denoted by "PET-G" in the examples) as the first resin composition was put into the hopper of a first extruder, and the PET-G was molten to be mixed and kneaded in the screw unit of the first extruder. The above pressure sensitive adhesive composition (A) was put into the hopper of a second extruder, and the pressure sensitive adhesive composition (A) was molten to be mixed and kneaded in the screw unit of the second extruder. The molten PET-G discharged from the first extruder and the molten pressure sensitive adhesive composition (A) discharged from the second extruder were laminated on each other using a feed block. Furthermore, a T-die was used to obtain the first laminate as the pressure sensitive adhesive sheet so that the pressure sensitive adhesive layer formed of the pressure sensitive adhesive composition (A) would have a thickness of 20 $\mu$m and the base material formed of the PET-G would have a thickness of 50 $\mu$m.

The release surface of a release sheet ("SP-PET38 1031" available from LINTEC Corporation) was attached to the surface of the obtained pressure sensitive adhesive sheet at the side of the pressure sensitive adhesive layer, and a laminate structure was thus obtained comprising the pressure sensitive adhesive sheet and the release sheet.

The viscosity of resin in the feed block was simulated using simulation software ("Materialfit" available from HASL (Hyper Advanced Simulation Laboratory) Co., Ltd). The inner temperature in the feed block was 220°C. The average value of a viscosity at 220°C of the pressure sensitive adhesive composition (A) within a range of a shear velocity of $10^0$ to $10^3$ (unit: 1/s) was calculated to be 766.9 Pa·s. The average value of a viscosity at 220°C of the PET-G within a range of a shear velocity of $10^0$ to $10^3$ (unit: 1/s) was calculated to be 2,986.9 Pa·s. Therefore, the first viscosity ratio was 3.9.

<Example 2>

A laminate structure comprising the pressure sensitive adhesive sheet and the release sheet was obtained in the same manner as in Example 1 except that ethylene-methacrylic acid copolymer (EMAA, "Nucrel N0903HC" available from DUPONT-MITSUI POLYCHEMICALS CO., LTD) was used as the first resin composition as substitute for the PET-G.

As a result of performing simulation of the viscosity in the same manner as in Example 1, the average value of a viscosity at 220°C of the EMAA within a range of a shear velocity of $10^0$ to $10^3$ (unit: 1/s) was calculated to be 1,472.2 Pa·s. Therefore, the first viscosity ratio was 1.9.

<Example 3>

The second laminate comprising a pressure sensitive adhesive layer of 20 μm and a release sheet of 40μm was obtained through coextrusion molding in the same manner as in Example 1 except that low-density polyethylene (LDPE, "Novatec LD LC604" available from Japan Polyethylene Corporation, briefly denoted by "RL-resin" in the examples) was used as the third resin composition as substitute for the PET-G as the first resin composition.

The surface of this laminate at the side of the pressure sensitive adhesive layer was attached to one surface of a polyester film (PET, "LUMIRROR S10" available from Toray Industries, Inc., thickness of 50 μm) as the base material, and a laminate structure was thus obtained comprising the pressure sensitive adhesive sheet and the release sheet.

As a result of performing simulation of the viscosity in the same manner as in Example 1, the average value of a viscosity at 220°C of the LDPE within a range of a shear velocity of $10^0$ to $10^3$ (unit: 1/s) was calculated to be 1,787.3 Pa·s. Therefore, the second viscosity ratio was 2.3.

<Example 4>

PET-G as the first resin composition was put into the hopper of a first extruder, and the PET-G was molten to be mixed and kneaded in the screw unit of the first extruder. Pressure sensitive adhesive composition (A) manufactured through the method of manufacturing in Example 1 was put, as the second resin composition, into the hopper of a second extruder, and the pressure sensitive adhesive composition (A) was molten to be mixed and kneaded in the screw unit of the second extruder. RL-resin as the third resin composition was put into the hopper of a third extruder, and the RL-resin was molten to be mixed and kneaded in the screw unit of the third extruder.

The molten PET-G discharged from the first extruder, the molten pressure sensitive adhesive composition (A) discharged from the second extruder and the molten RL-resin discharged from the third extruder were laminated together using a feed block so that the configuration in the feed block would be PET-G/pressure sensitive adhesive composition (A)/RL-resin. Furthermore, a T-die was used to obtain the third laminate as the laminate structure comprising the pressure sensitive adhesive sheet and the release sheet so that the base material formed of the PET-G would have a thickness of 50 μm, the pressure sensitive adhesive layer formed of the pressure sensitive adhesive composition (A) would have a thickness of 20 μm and the release sheet formed of the RL-resin would have a thickness of 40 μm.

The viscosity of resin in the feed block was simulated using simulation software ("Materialfit" available from HASL (Hyper Advanced Simulation Laboratory) Co., Ltd). The inner temperature in the feed block was 220°C. The average value of a viscosity at 220°C of the PET-G within a range of a shear velocity of $10^0$ to $10^3$ (unit: 1/s) was calculated to be 2,986.9 Pa·s. The average value of a viscosity at 220°C of the pressure sensitive adhesive composition (A) within a range of a shear velocity of $10^0$ to $10^3$ (unit: 1/s) was calculated to be 766.9 Pa·s. The average value of a viscosity at 220°C of the RL-resin within a range of a shear velocity of $10^0$ to $10^3$ (unit: 1/s) was calculated to be 1,787.3 Pa·s. Therefore, the third viscosity ratio was 3.9, and the fourth viscosity ratio was 2.3.

<Example 5>

A pressure sensitive adhesive composition (B) was obtained as substitute for the pressure sensitive adhesive composition (A) in the same manner as in Example 1 except that the type of the noncrosslinked polymethyl methacrylate microparticles was changed to "Techpolymer MB-8" available from SEKISUI PLASTICS CO., Ltd. (average particle diameter: 8.7 μm, weight average molecular weight (Mw) in polystyrene equivalent: 1,120,000). Thereafter, a laminate structure comprising the pressure sensitive adhesive sheet and the release sheet was obtained in the same manner as in Example 1 except that the pressure sensitive adhesive composition (B) was used as the second resin composition.

As a result of performing simulation of the viscosity in the same manner as in Example 1, the average value of a viscosity at 220°C of the pressure sensitive adhesive composition (B) within a range of a shear velocity of $10^0$ to $10^3$ (unit: 1/s) was calculated to be 823.6 Pa·s. Therefore, the first viscosity ratio was 3.6.

<Comparative Example 1>

With the intention to obtain the second resin composition comprising the acrylic triblock pressure sensitive adhesive as used in Example 1, pellets of the pressure sensitive adhesive were put into the hopper of the second extruder, but the resin was not appropriately carried into the screw unit. Accordingly, the pressure sensitive adhesive sheet was not able to be manufactured.

<Comparative Example 2>

A pressure sensitive adhesive composition (C) was obtained as substitute for the pressure sensitive adhesive composition (A) in the same manner as in Example 1 except that the additive amount of the noncrosslinked polymethyl methacrylate microparticles was 0.01 mass parts relative to 100 mass parts of the acrylic triblock pressure sensitive adhesive.

With the intention to form the first laminate comprising the base material and the pressure sensitive adhesive layer in the same manner as in Example 1 except that the obtained pressure sensitive adhesive composition (C) was used as the second resin composition, encapsulation occurred, and the lamellar body formed of the first resin composition and the lamellar body formed of the second resin composition was not appropriately laminated on each other. Accordingly, the pressure sensitive adhesive sheet was not able to be manufactured in Comparative Example 2.

As a result of performing simulation of the viscosity in the same manner as in Example 1, the average value of a viscosity at 220°C of the pressure sensitive adhesive composition (C) within a range of a shear velocity of $10^0$ to $10^3$ (unit: 1/s) was calculated to be 658.2 Pa·s. Therefore, the first viscosity ratio was 4.5.

<Comparative Example 3>

A pressure sensitive adhesive composition (D) was obtained as substitute for the pressure sensitive adhesive composition (A) in the same manner as in Example 1 except that the additive amount of the noncrosslinked polymethyl methacrylate microparticles was 10 mass parts relative to 100 mass parts of the acrylic triblock pressure sensitive adhesive.

With the intention to form the first laminate comprising the base material and the pressure sensitive adhesive layer in the same manner as in Example 1 except that the obtained pressure sensitive adhesive composition (D) was used as the second resin composition, the noncrosslinked polymethyl methacrylate microparticles were excessive for the pressure sensitive adhesive composition (D) to be carried appropriately into the screw unit. Therefore, the pressure sensitive adhesive sheet was not able to be manufactured.

<Comparative Example 4>

A pressure sensitive adhesive composition (E) was obtained as substitute for the pressure sensitive adhesive composition (A) in the same manner as in Example 1 except that 1 mass part of crosslinked polymethyl methacrylate microparticles ("Delpowder 720V" available from Asahi Kasei Corporation, average particle diameter: 300 µm) was added without containing noncrosslinked polymethyl methacrylate microparticles.

With the intention to form the first laminate comprising the base material and the pressure sensitive adhesive layer in the same manner as in Example 1 except that the obtained pressure sensitive adhesive composition (E) was used as the second resin composition, the lamellar body formed of the second resin composition was not appropriately laminated on the lamellar body (base material) formed of the first resin composition, and the thickness of the lamellar body of the second resin composition was not uniform. Accordingly, the pressure sensitive adhesive sheet was not able to be manufactured in Comparative Example 4.

[Industrial Applicability]

The method of manufacturing a laminate structure according to the present invention is suitable as a method of manufacturing laminate structures for various uses because laminate structures comprising pressure sensitive adhesive sheets can be manufactured with high productivity. The pressure sensitive adhesive layer of the pressure sensitive adhesive sheet, which is included in the laminate structure according to the present invention, has excellent properties, and the laminate structure according to the present invention can therefore be used preferably for the use where the pressure sensitive adhesive layer is required to be transparent and/or the use where stable pressure sensitive adhesion is required.

[Description of Reference Numerals]

1... Pressure sensitive adhesive sheet
2... Base material
3... Pressure sensitive adhesive layer
4... Release sheet
10... Laminate structure (first laminate structure, second laminate structure, third laminate structure)

For the avoidance of doubt, the first coextrusion molding step, the second coextrusion molding step, and the third coextrusion molding step described herein are alternatives. Thus, in one embodiment of the method of manufacturing a laminate structure of the present invention, the method comprises the first coextrusion molding step but not the second or third coextrusion molding steps. In another embodiment of the method of manufacturing a laminate structure of the present invention, the method comprises the second coextrusion molding step but not the first or third coextrusion molding steps. In a further embodiment of the method of manufacturing a laminate structure of the present invention, the method comprises the third coextrusion molding step but not the first or second coextrusion molding steps.

## Claims

1. A method of manufacturing a laminate structure (1,10) comprising a pressure sensitive adhesive sheet (1), the pressure sensitive adhesive sheet (1) comprising a base material (2) and a pressure sensitive adhesive layer (3) laminated on one surface of the base material (2), wherein the method comprises one selected from (I), (II) and (III):

   (I) a first coextrusion molding step of performing coextrusion molding of a first resin composition for forming the base material (2) and a second resin composition for forming the pressure sensitive adhesive layer (3) thereby to obtain a first laminate as the pressure sensitive adhesive sheet (1), the first laminate being formed such that the base material (2) and the pressure sensitive adhesive layer (3) are laminated on each other;
   (II) a second coextrusion molding step of performing coextrusion molding of a third resin composition for forming a release sheet (4) and a second resin composition for forming the pressure sensitive adhesive layer (3) thereby to obtain a second laminate formed such that the release sheet (4) and the pressure sensitive adhesive layer (3) are laminated on each other in a releasable manner, and
   a base material laminating step of laminating the base material (2) on a surface of the second laminate at a side of the pressure sensitive adhesive layer (3) to obtain the laminate structure (10) comprising the pressure sensitive adhesive sheet (1) and the release sheet (4); and
   (III) a third coextrusion molding step of performing coextrusion molding of a first resin composition for forming the base material (2), a second resin composition for forming the pressure sensitive adhesive layer (3) and a third resin composition for forming a release sheet (4) thereby to obtain a third laminate as the laminate structure (10) comprising the pressure sensitive adhesive sheet (1) and the release sheet (4), the third laminate being formed such that the base material (2) is laminated on one surface of the pressure sensitive adhesive layer (3) and the release sheet (4) is laminated on other surface of the pressure sensitive adhesive layer (3) in a releasable manner,

   wherein
   the second resin composition contains a main resin and a first resin,
   **characterized in that**:

   the first resin is a noncrosslinked-type resin having compatibility with the main resin,

   the first resin is a resin of the same series as the main resin, and
   the first resin is supplied as a powder when the second resin composition is prepared.

2. The method of manufacturing a laminate structure (1,10) as recited in claim 1, wherein, after the first coextrusion molding step, a release surface of a release sheet (4) is attached to a surface of the pressure sensitive adhesive sheet (1) at a side of the pressure sensitive adhesive layer (3), and the laminate structure (10) is obtained comprising the pressure sensitive adhesive sheet (1) and the release sheet (4).

3. The method of manufacturing a laminate structure (1,10) as recited in claim 1 or 2, wherein, in the first coextrusion molding step, a ratio of an average value of a viscosity of the first resin composition within a range of a shear velocity of $10^0$ to $10^3$ (unit: 1/s) to an average value of a viscosity of the second resin composition within a range of a shear velocity of $10^0$ to $10^3$ (unit: 1/s) is 1 or more and 4.3 or less at a temperature when the first resin composition and the second resin composition are in contact with each other to be laminated on each other.

4. The method of manufacturing a laminate structure (10) as recited in claim 1, wherein, in the second coextrusion molding step, a ratio of an average value of a viscosity of the third resin composition within a range of a shear velocity of $10^0$ to $10^3$ (unit: 1/s) to an average value of a viscosity of the second resin composition within a range of a shear velocity of $10^0$ to $10^3$ (unit: 1/s) is 1 or more and 4.3 or less at a temperature when the third resin composition and the second resin composition are in contact with each other to be laminated on each other.

5. The method of manufacturing a laminate structure (10) as recited in claim 1, wherein,
   in the third coextrusion molding step,
   a ratio of an average value of a viscosity of the first resin composition within a range of a shear velocity of $10^0$ to $10^3$ (unit: 1/s) to an average value of a viscosity of the second resin composition within a range of a shear velocity of $10^0$ to $10^3$ (unit: 1/s) is 1 or more and 4.3 or less at a temperature when the first resin composition and the second resin composition are in contact with each other to be laminated on each other, and
   a ratio of an average value of a viscosity of the third resin composition within a range of a shear velocity of $10^0$ to $10^3$ (unit: 1/s) to an average value of a viscosity of the second resin composition within a range of a shear velocity of $10^0$ to $10^3$ (unit: 1/s) is 1 or more and 4.3 or less at a temperature when the third resin composition and the second resin composition are in contact with each other to be laminated on each other.

6. The method of manufacturing a laminate structure (1,10) as recited in any one of claims 1 to 5, wherein the first resin is in a state of being dissolved in the main resin in the second resin composition which is in a molten state.

7. The method of manufacturing a laminate structure (1,10) as recited in any one of claims 1 to 6, wherein the first resin has a weight average molecular weight (Mw) of 500,000 or more in polystyrene equivalent.

8. The method of manufacturing a laminate structure (1,10) as recited in any one of claims 1 to 7, wherein the powder has an average particle diameter of more than 2.5 $\mu$m.

9. The method of manufacturing a laminate structure (1,10) as recited in any one of claims 1 to 8, wherein the first resin has a content of more than 0.01 mass% and less than 10 mass% in the second resin composition.

10. The method of manufacturing a laminate structure (1,10) as recited in any one of claims 1 to 9, wherein the main resin and the first resin each comprise an acrylic-based resin.

11. The method of manufacturing a laminate structure (1,10) as recited in claim 10, wherein the main resin comprises a (meth)acrylic-based triblock polymer.

12. A laminate structure (1,10) comprising a pressure sensitive adhesive sheet (1), the pressure sensitive adhesive sheet (1) comprising a base material (2) and a pressure sensitive adhesive layer (3) laminated on one surface of the base material (2), wherein the pressure sensitive adhesive layer (3) contains a main resin and a first resin, and the laminate structure (1, 10) has any one of features (I), (II) and (III) :

   (I) the pressure sensitive adhesive sheet (1) is a coextrusion molded product using a first resin composition for forming the base material (2) and a second resin composition for forming the pressure sensitive adhesive layer (3);
   (II) the laminate structure (10) further comprises a release sheet (4) laminated on a surface of the pressure sensitive adhesive sheet (1) at a side of the pressure sensitive adhesive layer (3) in a releasable manner, and a laminate of the pressure sensitive adhesive layer (3) and the release sheet (4) is a coextrusion molded product using a second resin composition for forming the pressure sensitive adhesive layer (3) and a third resin composition for forming the release sheet (4);
and
(III) the laminate structure (10) further comprises a release sheet (4) laminated on a surface of the pressure sensitive adhesive sheet (1) at a side of the pressure sensitive adhesive layer (3) in a releasable manner, and the laminate structure (10) is a coextrusion molded product using a first resin composition for forming the base material (2), a second resin composition for forming the pressure sensitive adhesive layer (3) and a third resin composition for forming the release sheet (4)

**characterized in that**:

in the second resin composition of the pressure sensitive adhesive layer (3) the first resin is a noncrosslinked-type resin having compatibility with the main resin, and the first resin is a resin of the same series as the main resin.

**Patentansprüche**

1. Verfahren zum Herstellen einer Laminatstruktur (1,10), die eine druckempfindliche Klebefolie (1) umfasst, wobei die druckempfindliche Klebefolie (1) ein Basismaterial (2) und eine druckempfindliche Klebschicht (3), die auf eine Fläche des Basismaterials (2) laminiert ist, umfasst, wobei das Verfahren ein aus (I), (II) und (III) Ausgewähltes umfasst:

   (I) einen ersten Coextrusionsformungsschritt des Durchführens einer Coextrusionsformung einer ersten Harzzusammensetzung zum Bilden des Basismaterials (2) und einer zweiten Harzzusammensetzung zum Bilden der druckempfindlichen Klebschicht (3), um dadurch ein erstes Laminat als die druckempfindliche Klebefolie (1) zu erhalten, wobei das erste Laminat derart gebildet ist, dass das Basismaterial (2) und die druckempfindliche Klebschicht (3) aufeinander laminiert sind;
   (II) einen zweiten Coextrusionsformungsschritt des Durchführens einer Coextrusionsformung einer dritten Harzzusammensetzung zum Bilden einer Lösefolie (4) und einer zweiten Harzzusammensetzung zum Bilden der druckempfindlichen Klebschicht (3), um dadurch ein zweites Laminat zu erhalten, das derart gebildet ist, dass die Lösefolie (4) und die druckempfindliche Klebschicht (3) in lösbarer Weise aufeinander laminiert sind, und einen Basismateriallaminierungsschritt der Laminierung des Basismaterials (2) auf eine Fläche des zweiten Laminats auf einer Seite der druckempfindlichen Klebschicht (3), um die Laminatstruktur (10) zu erhalten, die die druckempfindliche Klebefolie (1) und die Lösefolie (4) umfasst; und

(III) einen dritten Coextrusionsformungsschritt des Durchführens einer Coextrusionsformung einer ersten Harzzusammensetzung zum Bilden des Basismaterials (2), einer zweiten Harzzusammensetzung zum Bilden der druckempfindlichen Klebschicht (3) und einer dritten Harzzusammensetzung zum Bilden einer Lösefolie (4), um dadurch ein drittes Laminat als die Laminatstruktur (10) zu erhalten, die die druckempfindliche Klebefolie (1) und die Lösefolie (4) umfasst, wobei das dritte Laminat derart gebildet ist, dass das Basismaterial (2) auf einer Fläche der druckempfindlichen Klebschicht (3) und die Lösefolie (4) auf der anderen Fläche der druckempfindlichen Klebschicht (3) in lösbarer Weise laminiert ist,

wobei

die zweite Harzzusammensetzung ein Hauptharz und ein erstes Harz enthält,
**dadurch gekennzeichnet, dass**:

das erste Harz ein nichtvernetztes Harz ist, das eine Kompatibilität mit dem Hauptharz aufweist, das erste Harz ein Harz derselben Serie ist wie das Hauptharz und
das erste Harz als ein Pulver geliefert wird, wenn die zweite Harzzusammensetzung zubereitet wird.

2. Verfahren zum Herstellen einer Laminatstruktur (1,10) nach Anspruch 1, wobei nach dem ersten Coextrusionsformungsschritt eine Lösefläche einer Lösefolie (4) auf einer Fläche der druckempfindlichen Klebefolie (1) auf einer Seite der druckempfindlichen Klebschicht (3) befestigt wird und die Laminatstruktur (10) erhalten wird, die die druckempfindliche Klebefolie (1) und die Lösefolie (4) umfasst.

3. Verfahren zum Herstellen einer Laminatstruktur (1,10) nach Anspruch 1 oder 2, wobei beim ersten Coextrusionsformungsschritt ein Verhältnis eines Durchschnittswerts einer Viskosität der ersten Harzzusammensetzung innerhalb eines Bereichs einer Schergeschwindigkeit von 10° bis $10^3$ (Einheit: 1/s) zu einem Durchschnittswert einer Viskosität der zweiten Harzzusammensetzung innerhalb eines Bereichs einer Schergeschwindigkeit von 10° bis $10^3$ (Einheit: 1/s) bei einer Temperatur, bei der die erste Harzzusammensetzung und die zweite Harzzusammensetzung miteinander in Kontakt sind, um aufeinander laminiert zu werden, 1 oder mehr und 4,3 oder weniger beträgt.

4. Verfahren zum Herstellen einer Laminatstruktur (10) nach Anspruch 1, wobei beim zweiten Coextrusionsformungsschritt ein Verhältnis eines Durchschnittswerts einer Viskosität der dritten Harzzusammensetzung innerhalb eines Bereichs einer Schergeschwindigkeit von $10^0$ bis $10^3$ (Einheit: 1/s) zu einem Durchschnittswert einer Viskosität der zweiten Harzzusammensetzung innerhalb eines Bereichs einer Schergeschwindigkeit von $10^0$ bis $10^3$ (Einheit: 1/s) bei einer Temperatur, bei der die dritte Harzzusammensetzung und die zweite Harzzusammensetzung miteinander in Kontakt sind, um aufeinander laminiert zu werden, 1 oder mehr und 4,3 oder weniger beträgt.

5. Verfahren zum Herstellen einer Laminatstruktur (10) nach Anspruch 1, wobei, beim dritten Coextrusionsformungsschritt ein Verhältnis eines Durchschnittswerts einer Viskosität der ersten Harzzusammensetzung innerhalb eines Bereichs einer Schergeschwindigkeit von $10^0$ bis $10^3$ (Einheit: 1/s) zu einem Durchschnittswert einer Viskosität der zweiten Harzzusammensetzung innerhalb eines Bereichs einer Schergeschwindigkeit von $10^0$ bis $10^3$ (Einheit: 1/s) bei einer Temperatur, bei der die erste Harzzusammensetzung und die zweite Harzzusammensetzung miteinander in Kontakt sind, um aufeinander laminiert zu werden, 1 oder mehr und 4,3 oder weniger beträgt, und
ein Verhältnis eines Durchschnittswerts einer Viskosität der dritten Harzzusammensetzung innerhalb eines Bereichs einer Schergeschwindigkeit von $10^0$ bis $10^3$ (Einheit: 1/s) zu einem Durchschnittswert einer Viskosität der zweiten Harzzusammensetzung innerhalb eines Bereichs einer Schergeschwindigkeit von $10^0$ bis $10^3$ (Einheit: 1/s) bei einer Temperatur, bei der die dritte Harzzusammensetzung und die zweite Harzzusammensetzung miteinander in Kontakt sind, um aufeinander laminiert zu werden, 1 oder mehr und 4,3 oder weniger beträgt.

6. Verfahren zum Herstellen einer Laminatstruktur (1,10) nach einem der Ansprüche 1 bis 5, wobei das erste Harz sich in einem Zustand der Auflösung im Hauptharz in der zweiten Harzzusammensetzung befindet, die sich in einem geschmolzenen Zustand befindet.

7. Verfahren zum Herstellen einer Laminatstruktur (1,10) nach einem der Ansprüche 1 bis 6, wobei das erste Harz ein gewichtsmittleres Molekulargewicht (Mw) von 500.000 oder mehr in Polystoroläquivalent aufweist.

8. Verfahren zum Herstellen einer Laminatstruktur (1,10) nach einem der Ansprüche 1 bis 7, wobei das Pulver einen durchschnittlichen Teilchendurchmesser von mehr als 2,5 μm aufweist.

9. Verfahren zum Herstellen einer Laminatstruktur (1,10) nach einem der Ansprüche 1 bis 8, wobei das erste Harz einen Anteil von mehr als 0,01 Masse-% und weniger als 10 Masse-% in der zweiten Harzzusammensetzung aufweist.

10. Verfahren zum Herstellen einer Laminatstruktur (1,10) nach einem der Ansprüche 1 bis 9, wobei das Hauptharz und das erste Harz jeweils ein acrylbasiertes Harz umfassen.

11. Verfahren zum Herstellen einer Laminatstruktur (1,10) nach Anspruch 10, wobei das Hauptharz ein (meth)acrylbasiertes Triblockpolymer umfasst.

12. Laminatstruktur (1,10), die eine druckempfindliche Klebefolie (1) umfasst, wobei die druckempfindliche Klebefolie (1) ein Basismaterial (2) und eine druckempfindliche Klebschicht (3), die auf eine Fläche des Basismaterials (2) laminiert ist, umfasst, wobei
die druckempfindliche Klebschicht (3) ein Hauptharz und ein erstes Harz enthält und die Laminatstruktur (1, 10) eines der Merkmale (I), (II) und (III) aufweist:

(I) die druckempfindliche Klebefolie (1) ist ein coextrusionsgeformtes Produkt, das eine erste Harzzusammensetzung zum Bilden des Basismaterials (2) und eine zweite Harzzusammensetzung zum Bilden der druckempfindlichen Klebschicht (3) verwendet;

(II) die Laminatstruktur (10) umfasst ferner eine Lösefolie (4), die auf einer Fläche der druckempfindlichen Klebefolie (1) auf einer Seite der druckempfindlichen Klebschicht (3) in lösbarer Weise laminiert ist, und
ein Laminat der druckempfindlichen Klebschicht (3) und der Lösefolie (4) ist ein coextrusionsgeformtes Produkt, das eine zweite Harzzusammensetzung zum Bilden der druckempfindlichen Klebschicht (3) und eine dritte Harzzusammensetzung zum Bilden der Lösefolie (4) verwendet; und

(III) die Laminatstruktur (10) umfasst ferner eine Lösefolie (4), die auf einer Fläche der druckempfindlichen Klebefolie (1) auf einer Seite der druckempfindlichen Klebschicht (3) in lösbarer Weise laminiert ist, und
die Laminatstruktur (10) ist ein coextrusionsgeformtes Produkt, das eine erste Harzzusammensetzung zum Bilden des Basismaterials (2), eine zweite Harzzusammensetzung zum Bilden der druckempfindlichen Klebschicht (3) und eine dritte Harzzusammensetzung zum Bilden der Lösefolie (4) verwendet

**dadurch gekennzeichnet, dass**:
bei der zweiten Harzzusammensetzung der druckempfindlichen Klebschicht (3) das erste Harz ein nichtvernetztes Harz ist, das eine Kompatibilität mit dem Hauptharz aufweist, und
das erste Harz ein Harz derselben Serie ist wie das Hauptharz.

**Revendications**

1. Procédé de fabrication d'une structure stratifiée (1, 10) comprenant une feuille d'adhésif auto-collant (1), la feuille d'adhésif auto-collant (1) comprenant un matériau de base (2) et une couche d'adhésif auto-collant (3) stratifiée sur une surface du matériau de base (2), le procédé comprenant un des éléments choisis parmi (I), (II) et (III) :

(I) une première étape de moulage par co-extrusion consistant à effectuer un moulage par co-extrusion d'une première composition de résine pour former le matériau de base (2) et d'une deuxième composition de résine pour former la couche d'adhésif auto-collant (3), permettant ainsi d'obtenir un premier stratifié en tant que feuille d'adhésif auto-collant (1), le premier stratifié étant formé de manière que le matériau de base (2) et la couche d'adhésif auto-collant (3) sont stratifiés l'un sur l'autre ;
(II) une deuxième étape de moulage par co-extrusion consistant à effectuer un moulage par co-extrusion d'une troisième composition de résine pour former une feuille anti-adhésive (4) et d'une deuxième composition de résine pour former la couche d'adhésif auto-collant (3), permettant ainsi d'obtenir un deuxième stratifié de manière que la feuille anti-adhésive (4) et la couche d'adhésif auto-collant (3) sont stratifiées l'une sur l'autre, de manière à pouvoir être détachées, et
une étape de stratification du matériau de base consistant à stratifier le matériau de base (2) sur une surface du deuxième stratifié sur un côté de la couche d'adhésif auto-collant (3) pour obtenir la structure stratifiée (10) comprenant la feuille d'adhésif auto-collant (1) et la feuille anti-adhésive (4) ; et
(III) une troisième étape de moulage par co-extrusion consistant à effectuer un moulage par co-extrusion d'une première composition de résine pour former le matériau de base (2), d'une deuxième composition de résine pour former la couche d'adhésif auto-collant (3) et d'une troisième composition de résine pour former une feuille anti-adhésive (4), permettant ainsi d'obtenir un troisième stratifié en tant que structure stratifiée (10) comprenant la feuille d'adhésif auto-collant (1) et la feuille anti-adhésive (4), le troisième stratifié étant formé de manière que le matériau de base (2) est stratifié sur une surface de la couche d'adhésif auto-collant (3) et la feuille anti-adhésive (4) est stratifiée sur une autre surface de la couche d'adhésif auto-collant (3) de manière à pouvoir être détachées,

la deuxième composition de résine contenant une résine principale et une première résine, **caractérisée en ce que** :

la première résine est une résine de type non réticulé présentant une compatibilité avec la résine principale,
la première résine est une résine de la même série en tant que la résine principale, et
la première résine se présente sous forme de poudre lorsque la deuxième composition de résine est préparée.

2. Procédé de fabrication d'une structure stratifiée (1, 10) tel que décrit dans la revendication 1, dans lequel, après la première étape de moulage par co-extrusion, une surface anti-adhésive d'une feuille anti-adhésive (4) est attachée à une surface de la feuille d'adhésif auto-collant (1) sur un côté de la couche d'adhésif auto-collant (3), et la structure stratifiée (10) est obtenue comprenant la feuille d'adhésif auto-collant (1) et la feuille anti-adhésive (4).

3. Procédé de fabrication d'une structure stratifiée (1, 10) tel que décrit dans la revendication 1 ou 2, dans lequel, dans la première étape de moulage par co-extrusion, un rapport d'une valeur moyenne d'une viscosité de la première composition de résine dans une plage d'une vitesse de cisaillement de $10^0$ à $10^3$ (unité : 1/s) à une valeur moyenne d'une viscosité de la deuxième composition de résine dans une plage d'une vitesse de cisaillement de $10^0$ à $10^3$ (unité : 1/s) est de 1 ou plus et de 4,3 ou moins à une température où la première composition de résine et la deuxième composition de résine sont en contact l'une avec l'autre pour être stratifiées l'une sur l'autre.

4. Procédé de fabrication d'une structure stratifiée (10) tel que décrit dans la revendication 1, dans lequel, dans la deuxième étape de moulage par co-extrusion, un rapport d'une valeur moyenne d'une viscosité de la troisième composition de résine dans une plage d'une vitesse de cisaillement de $10^0$ à $10^3$ (unité : 1/s) à une valeur moyenne d'une viscosité de la deuxième composition de résine dans une plage d'une vitesse de cisaillement de $10^0$ à $10^3$ (unité : 1/s) est de 1 ou plus et de 4,3 ou moins à une température où la troisième composition de résine et la deuxième composition de résine sont en contact l'une avec l'autre pour être stratifiées l'une sur l'autre.

5. Procédé de fabrication d'une structure stratifiée (10) tel que décrit dans la revendication 1, dans lequel, dans la troisième étape de moulage par co-extrusion, un rapport d'une valeur moyenne d'une viscosité de la première composition de résine dans une plage d'une vitesse de cisaillement de $10^0$ à $10^3$ (unité : 1/s) à une valeur moyenne d'une viscosité de la deuxième composition de résine dans une plage d'une vitesse de cisaillement de $10^0$ à $10^3$ (unité : 1/s) est de 1 ou plus et de 4,3 ou moins à une température où la première composition de résine et la deuxième composition de résine sont en contact l'une avec l'autre pour être stratifiées l'une sur l'autre, et
un rapport d'une valeur moyenne d'une viscosité de la troisième composition de résine dans une plage d'une vitesse de cisaillement de $10^0$ à $10^3$ (unité : 1/s) à une valeur moyenne d'une viscosité de la deuxième composition de résine dans une plage d'une vitesse de cisaillement de $10^0$ à $10^3$ (unité : 1/s) est de 1 ou plus et de 4,3 ou moins à une température où la troisième composition de résine et la deuxième composition de résine sont en contact l'une avec l'autre pour être stratifiées l'une sur l'autre.

6. Procédé de fabrication d'une structure stratifiée (1, 10) tel que décrit dans l'une quelconque des revendications 1 à 5, dans lequel la première résine est dans un état dissous dans la résine principale dans la deuxième composition de résine qui est dans un état fondu.

7. Procédé de fabrication d'une structure stratifiée (1, 10) tel que décrit dans l'une quelconque des revendications 1 à 6, dans lequel la première résine présente un poids moléculaire moyen de poids (Mw) de 500,000 ou plus en équivalent-polystyrène.

8. Procédé de fabrication d'une structure stratifiée (1, 10) tel que décrit dans l'une quelconque des revendications 1 à 7, dans lequel la poudre présente un diamètre particulaire moyen de plus de 2,5 $\mu$m.

9. Procédé de fabrication d'une structure stratifiée (1, 10) tel que décrit dans l'une quelconque des revendications 1 à 8, dans lequel la première résine présente une teneur de plus de 0,01 % en masse et de moins de 10 % en masse dans la deuxième composition de résine.

10. Procédé de fabrication d'une structure stratifiée (1, 10) tel que décrit dans l'une quelconque des revendications 1 à 9, dans lequel la résine principale et la première résine comprennent chacune une résine à base acrylique.

**11.** Procédé de fabrication d'une structure stratifiée (1, 10) tel que décrit dans la revendication 10, dans lequel la résine principale comprend un polymère tribloc à base (méth)acrylique.

**12.** Structure stratifiée (1, 10) comprenant une feuille d'adhésif auto-collant (1), la feuille d'adhésif auto-collant (1) comprenant un matériau de base (2) et une couche d'adhésif auto-collant (3) stratifiée sur une surface du matériau de base (2), dans laquelle la couche d'adhésif auto-collant (3) contient une résine principale et une première résine, et la structure stratifiée (1, 10) présente l'une quelconque des caractéristiques (I), (II) et (III) :

(I) la feuille d'adhésif auto-collant (1) est un produit moulé par co-extrusion à l'aide d'une première composition de résine pour former le matériau de base (2) et d'une deuxième composition de résine pour former la couche d'adhésif auto-collant (3) ;

(II) la structure stratifiée (10) comprend en outre une feuille anti-adhésive (4) stratifiée sur une surface de la feuille d'adhésif auto-collant (1) sur un côté de la couche d'adhésif auto-collant (3) de manière à pouvoir être détachées, et un stratifié de la couche d'adhésif auto-collant (3) et de la feuille anti-adhésive (4) est un produit moulé par co-extrusion à l'aide d'une deuxième composition de résine pour former la couche d'adhésif auto-collant (3) et d'une troisième composition de résine pour former la feuille anti-adhésive (4) ; et

(III) la structure stratifiée (10) comprend en outre une feuille anti-adhésive (4) stratifiée sur une surface de la feuille d'adhésif auto-collant (1) sur un côté de la couche d'adhésif auto-collant (3) de manière à pouvoir être détachées, et

la structure stratifiée (10) est un produit moulé par co-extrusion à l'aide d'une première composition de résine pour former le matériau de base (2), d'une deuxième composition de résine pour former la couche d'adhésif auto-collant (3) et d'une troisième composition de résine pour former la feuille anti-adhésive (4)

**caractérisée en ce que** :

dans la deuxième composition de résine de la couche d'adhésif auto-collant (3) la première résine est une résine de type non réticulé présentant une compatibilité avec la résine principale, et la première résine est une résine de la même série en tant que résine principale.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009167312 A
- US 4839123 A
- WO 1995016754 A1
- WO 2013134000 A1
- WO 2001083212 A1
- JP 2001062894 A
- WO 2000013888 A1